# FASCICULE DE BREVET EUROPEEN

(11) **EP 3 112 226 B1**
(45) Date de publication et mention de la délivrance du brevet: **19.09.2018**
(21) Numéro de dépôt: 16176450.1
(22) Date de dépôt: 27.06.2016
(51) Int. Cl.: B60S 1/40, B60S 1/38

(54) **ORGANE POUR UN SYSTÈME DE CONNEXION D'UN BALAI D'ESSUYAGE À UN BRAS D'ESSUIE-GLACE**
ORGAN FÜR EIN VERBINDUNGSSYSTEM EINES WISCHERBLATTS AN EINEN SCHEIBENWISCHERARM
MEMBER FOR A SYSTEM FOR CONNECTING A WIPER BLADE TO A WINDSCREEN WIPER ARM

(30) Priorité: 29.06.2015 FR 1556018
(43) Date de publication de la demande: 04.01.2017
(73) Titulaire: Valeo Systèmes d'Essuyage, 78322 Le Mesnil Saint Denis (FR)
(72) Inventeur: TERRASSE, William, 63270 VIC LE COMTE (FR); MOULEYRE, Guillaume, 63122 Saint Genès Champanelle (FR)
(74) Mandataire: Vincent, Catherine Marie Marguerite

(56) Documents cités:
- FR-A1- 2 994 146
- US-A1- 2012 060 316
- US-A1- 2014 053 361
- US-A1- 2015 135 466

## Description

### DOMAINE TECHNIQUE

La présente invention concerne notamment un organe pour un système de connexion d'un balai à un bras d'essuie-glace, en particulier d'un véhicule automobile.

### ETAT DE L'ART

Le document FR 2 994 146 A1 décrit un organe selon le préambule de la revendication 1.

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée *"flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans cette dernière solution, le balai est rattaché au bras d'entraînement par un système de connexion comportant un connecteur et un adaptateur. Le connecteur est une pièce qui est solidarisée au balai, alors que l'adaptateur est solidaire du bras. L'adaptateur est une pièce intermédiaire qui permet la liaison et la fixation du connecteur sur le bras d'entraînement.

Le connecteur et l'adaptateur comprennent chacun des moyens d'articulation configurés pour coopérer avec des moyens complémentaires de l'autre organe, pour définir au moins un axe transversal de pivotement du connecteur vis-à-vis de l'adaptateur. Dans la technique actuelle, l'un des organes comprend en général un axe physique sensiblement cylindrique qui définit l'axe d'articulation et qui est reçu dans un orifice de forme complémentaire de l'autre organe.

Pour faciliter le montage de l'axe physique de l'un des organes dans l'orifice de l'autre organe, il est connu de prévoir sur l'un des organes des moyens de centrage et de guidage configurés pour coopérer avec des moyens complémentaires de l'autre organe. Ces moyens de centrage comprennent en général de nombreuses surfaces d'appui et de glissement qui, du fait notamment des tolérances de fabrication et de montage, ne coopèrent pas efficacement entre elles et limitent l'utilité de ces moyens de centrage.

L'invention propose une solution simple, efficace et économique à ce problème, qui concerne un organe de système de connexion, et peut indifféremment s'appliquer à un connecteur ou à un adaptateur, voire aux deux.

### EXPOSE DE L'INVENTION

L'invention a pour objet un organe pour un système de connexion d'un balai d'essuyage à un bras d'essuie-glace, cet organe comprenant des moyens d'articulation configurés pour coopérer avec des premiers moyens complémentaires d'un second organe du système de connexion de manière à tourner autour d'au moins un axe d'articulation de l'organe vis-à-vis de ce second organe, ledit organe comportant des moyens de centrage et de guidage configurés pour coopérer avec des seconds moyens complémentaires du second organe pour faciliter le montage de l'organe dans ou sur le second organe, lesdits moyens de centrage et de guidage comprenant au moins deux portions distinctes et jointives.

Ces portions jointives et distinctes facilitent l'insertion d'un organe sur l'autre et limite les efforts générés sur l'adaptateur quand celui-ci est inséré sur le connecteur.

Selon un aspect de l'invention, les portions sont chacune formée par un méplat formant surface de glissement. Dans la présente demande, on entend par « surface de glissement », une surface qui est configurée pour coopérer par glissement avec une surface ou un moyen complémentaire d'un autre élément, en particulier lors d'un montage. Il s'agit ainsi d'une surface fonctionnelle et non pas d'une simple surface de liaison.

Selon un exemple de réalisation, deux méplats sont adjacents et inclinés l'un par rapport à l'autre.

Selon un mode de réalisation, les moyens de centrage et de guidage comprennent uniquement deux portions distinctes et jointives.

On notera que les portions s'étendent dans des plans distincts, formant selon l'invention une encoche ou un chanfrein à section sensiblement en forme de V, droit ou inversé.

Quand les portions forment au moins une encoche qui présente en section une forme sensiblement en V droit, ses deux portions adjacentes sont inclinées l'une par rapport à l'autre d'un angle compris entre 30 et 170°, et de préférence entre 120 et 160°. Dans ce c as, ces portions sont formées sur un connecteur de balai d'essuyage.

Quand les portions forment au moins un chanfrein qui présente en section une forme sensiblement en V inversé, ses deux portions adjacentes étant inclinées l'une par rapport à l'autre d'un angle compris entre 190 et 330°, et de préférence entre 200 et 240°. Dans ce c as, ces portions sont formées sur un adaptateur intercalé entre un connecteur de balai d'essuyage et une pièce terminale de bras d'essuie-glace.

De manière avantageuse, les portions sont situées sur une arête dudit organe.

Selon l'invention, les portions sont situées au voisinage d'un orifice ou d'une protubérance constitutif des moyens d'articulation, l'orifice étant ménagé sur un connecteur alors que la ou les protubérances sont ménagées sur un adaptateur.

Les moyens de centrage et de guidage comprennent deux paires de portions qui sont symétriques par rapport à un premier plan médian longitudinal de l'organe.

Selon un exemple de réalisation, les moyens de centrage et de guidage comprennent deux paires de portions qui sont symétriques par rapport à un second plan médian transversal de l'organe.

On notera que le premier plan est perpendiculaire audit axe d'articulation et un second plan passe par l'axe d'articulation.

Selon un exemple de réalisation, l'organe est un connecteur configuré pour être solidarisé audit balai d'essuyage ou un adaptateur configuré pour être solidarisé au bras d'essuie-glace.

L'invention vise également un système de connexion d'un balai d'essuyage à un bras d'essuie-glace, ce système comportant deux organes dont l'un est configuré pour être solidarisé audit balai d'essuyage et l'autre est configuré pour être solidarisé au bras d'essuie-glace, caractérisé en ce qu'au moins un des organes, et de préférence les deux où l'un est un connecteur et l'autre est un adaptateur, est tel que défini selon l'une quelconques des caractéristiques présentées ci-dessus.

L'invention couvre encore un balai d'essuyage, caractérisé en ce qu'il comprend au moins un organe, et de préférence deux organes dont l'un est un connecteur et l'autre est un adaptateur, selon l'une des caractéristiques évoquées ci-dessus, ou un système selon le paragraphe précédent.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un essuie-glace, cet essuie-glace comportant un balai d'essuyage et un bras d'entraînement du balai d'essuyage, qui sont reliés l'un à l'autre par un système de connexion,
- la figure 2 est une vue schématique en perspective d'un balai d'essuyage équipé d'un système de connexion selon l'invention,
- la figure 3 est une vue schématique en perspective d'un connecteur du système de connexion de la figure 2,
- les figures 4 et 5 sont des vues schématiques partielles et à plus grande échelle du connecteur de la figure 3,
- les figures 6 et 7 sont des vues schématiques en perspective de l'adaptateur du système de connexion de la figure 2,
- les figures 8 et 9 sont des vues schématiques partielles et à plus grande échelle de l'adaptateur et du connecteur des figures 3 à 7,
- la figure 10 est une vue schématique en perspective et en coupe du système de connexion de la figure 2, et
- les figures 11 à 17 sont des vues schématiques en perspective du balai d'essuyage de la figure 2 et de différents bras d'entraînement reliés au balai d'essuyage par le système de connexion.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuyage ou du bras d'entraînement, autrement appelé bras d'essuie-glace. La direction longitudinale correspond à l'axe principal du balai d'essuyage ou du bras d'essuie-glace dans lequel il s'étend, alors que les orientations latérales correspondent à des droites concourantes, c'est-à-dire qui croisent la direction longitudinale, notamment perpendiculaires à l'axe longitudinal du balai d'essuyage ou du bras d'essuie-glace dans son plan de rotation. Pour les directions longitudinales, les dénominations extérieure (ou arrière) ou intérieure (ou avant) s'apprécient par rapport au point de fixation du balai d'essuyage sur le bras d'essuie-glace, la dénomination intérieure correspondant à la partie où le bras d'essuie-glace et un demi-balai s'étendent. Enfin, les directions référencées comme supérieures ou inférieures correspondent à des orientations perpendiculaires au plan de rotation du balai d'essuyage d'essuie-glace, la dénomination inférieure contenant le plan du pare-brise.

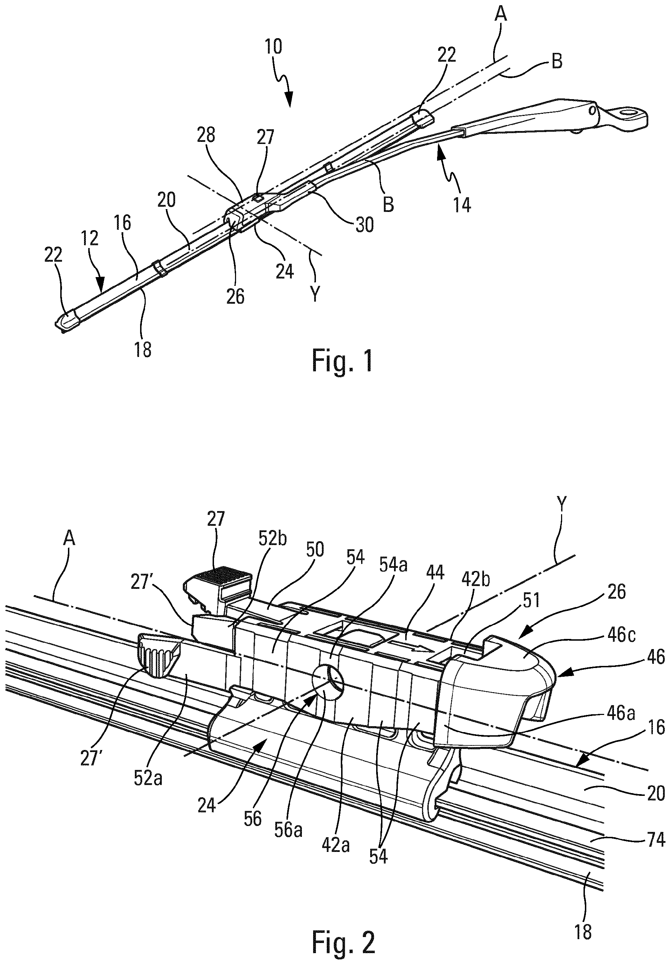

Il est illustré à la figure 1 un essuie-glace 10 comportant notamment un balai d'essuyage 12 et un bras d'essuie-glace 14 d'entraînement du balai d'essuyage 12.

Le balai d'essuyage 12 est de préférence du type flat blade et comprend un corps longitudinal 16, une lame d'essuyage 18, en général en caoutchouc, et au moins une vertèbre (non visible) qui rigidifie la lame et réparti un effort d'application du bras d'essuie-glace 14, de manière à favoriser l'application du balai d'essuyage 12 sur un pare-brise de véhicule.

Le corps 16 du balai d'essuyage 12 peut comporter un déflecteur aérodynamique supérieur 20 destiné à améliorer le fonctionnement du système d'essuyage, le but de ce déflecteur étant d'améliorer le plaquage du balai d'essuyage sur le pare-brise et donc la performance aérodynamique de l'essuie-glace.

Le balai d'essuyage 12 peut comprendre en outre des embouts d'extrémité 22 ou agrafes d'accrochage de la lame 18 et de la vertèbre sur le corps 16, ces embouts 22 étant situés à chacune des extrémités longitudinales du corps 16.

Le balai d'essuyage 12 comprend sensiblement en son milieu un connecteur 24. Un adaptateur 26 solidaire du bras d'essuie-glace 14 est monté sur le connecteur 24 de façon à garder un degré de liberté en pivotement autour d'un axe d'articulation Y qui est un axe transversal sensiblement perpendiculaire à l'axe longitudinal du balai d'essuyage 12. Ce degré de liberté autorise un pivotement du balai d'essuyage 12 vis-à-vis du bras d'essuie-glace 14 et permet ainsi au balai d'essuyage de suivre la courbure du pare-brise lors de ses déplacements. L'adaptateur 26 peut être désolidarisé du bras d'essuie-glace 14 par appui sur un bouton d'actionnement, ici un bouton poussoir 27, porté par l'adaptateur.

Le bras d'essuie-glace 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai d'essuyage 12 au bras d'essuie-glace 14 et en particulier à une tête ou pièce terminale 28 du bras d'essuie-glace qui peut être formée d'une seule pièce avec une âme du bras d'essuie-glace ou rapportée et fixée sur celle-ci.

Dans l'exemple représenté, la pièce terminale 28 du bras d'essuie-glace forme une chape à section transversale sensiblement en U.

La pièce terminale 28 a une forme allongée dont l'axe d'allongement A est en général sensiblement parallèle à l'axe d'allongement ou longitudinal du balai d'essuyage 12. La pièce terminale 28 comprend une partie 30 de liaison au reste du bras d'essuie-glace 14, par exemple par sertissage. Cette partie 30 a une forme générale allongée et s'étend le long d'un axe B sensiblement parallèle à l'axe A et à distance de cet axe, comme cela est visible à la figure 1. La partie 30 est reliée à une extrémité arrière ou intérieure de du reste de la pièce terminale 28.

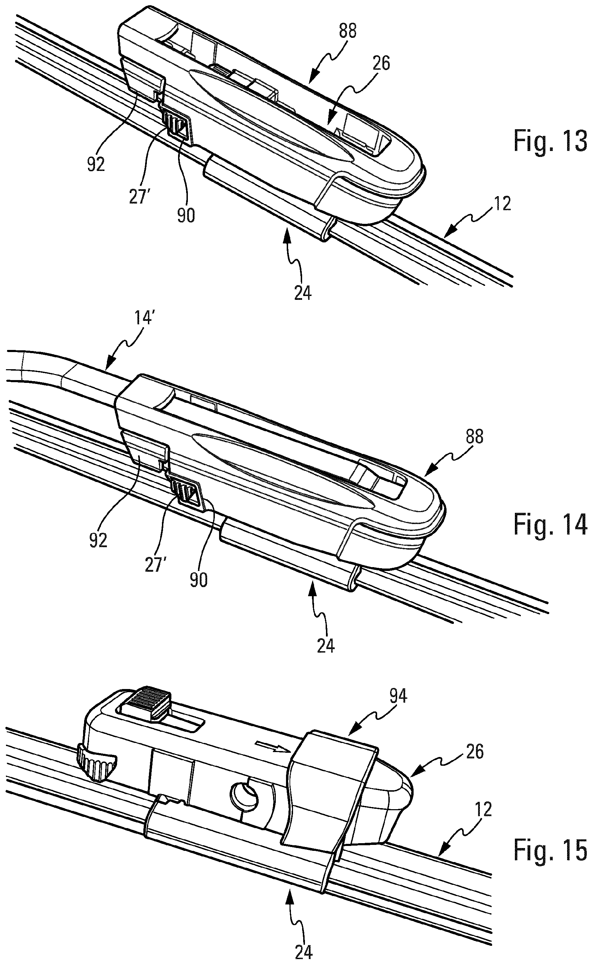

L'adaptateur 26 est du type « universel » et est destiné à être monté indifféremment sur différentes pièces terminales 28 de bras d'essuie-glace, voire sur des bras d'essuie-glace non équipés de pièces terminales, autrement appelé bras-tige, comme cela sera décrit plus en détail dans ce qui suit en référence aux figures 13 ou 14.

Les figures 2 à 10 montrent un mode de réalisation d'un organe selon l'invention. Dans une première situation, un tel organe peut être formé par l'adaptateur 26. Selon une seconde situation, l'organe de l'invention peut être formé par le connecteur 24. Enfin et selon une troisième situation, l'invention est formée par un système de connexion du balai d'essuyage 12 au bras d'essuie-glace 14, ou à un bras d'essuie-glace 14 parmi plusieurs types de bras d'essuie-glace, qui incorpore deux organes, un premier étant un adaptateur 26 tel que décrit et un second est un connecteur 24 tel que décrit.

L'adaptateur 24 a une forme générale allongée le long de l'axe A. Il comprend un corps comportant deux parois latérales 42a, 42b sensiblement parallèles entre elles et à l'axe A, et à distance l'une de l'autre. Ces parois 42a, 42b sont reliées entre elles à leurs extrémités supérieures par une paroi transversale supérieure 44 sensiblement perpendiculaire aux parois 42a, 42b. Cette paroi transversale supérieure 44 peut également être appelée base de l'adaptateur 24. Les parois latérales et transversale 42a, 42b et 44 ont ici une forme allongée en direction longitudinale.

Les parois latérales et transversale supérieure 42a, 42b, 44 de l'adaptateur 26 définissent entre elles un espace longitudinal 45 dans lequel est destinée à être montée une partie du connecteur 24. Les parois 42a, 42b sont ici du type à double peau et comportent chacune deux peaux, respectivement interne et externe, parallèles et à distance transversale l'une de l'autre. Les peaux sont reliées ensemble par des nervures rectilignes transversales.

Le corps de l'adaptateur 26 est relié à une première de ses extrémités longitudinales à un carénage ou capotage, aussi appelé casquette ou tête 46. Cette tête 46 a une dimension latérale supérieure à celle du corps de l'adaptateur et une hauteur également supérieure à celle du corps. Les parois latérales 42a, 42b du corps de l'adaptateur 26 sont ainsi en retrait ou décalées par rapport à des faces latérales externes 46a et 46b de la tête, et sa paroi supérieure 44 est en retrait ou décalée par rapport à une face supérieure externe 46c de la tête.

Les faces latérales 46a, 46b de la tête 46 sont reliées aux parois latérales 42a, 42b du corps par des faces arrière latérales 48a, 48b, qui s'étendent sensiblement perpendiculairement à l'axe A. La face supérieure 46c de la tête 46 est séparée de la paroi supérieure 44 du corps par un orifice ou trou 51 qui sert à recevoir une languette d'un bras d'entraînement.

Les faces arrière latérales et supérieure 48a, 48b de la tête 46 forment des faces d'appui de l'extrémité extérieure ou avant de la pièce terminale 28. Plus précisément, en position montée de l'adaptateur dans la pièce terminale 28, des bords libres avant des jambes latérales de la pièce terminale sont destinés à venir en appui sur les faces arrière latérales 48a, et un bord libre avant de la paroi transversale de la pièce terminale 28 est destiné à venir en appui sur la face arrière supérieure 48b de la tête 46.

La paroi supérieure 44 du corps de l'adaptateur 26 comprend, sensiblement en son milieu, une fenêtre 49. La paroi supérieure 44 comprend à son extrémité longitudinale opposée à la tête 46 des fentes longitudinales parallèles entre elles et à l'axe A et espacées les unes des autres, de façon à définir entre elles au moins une portion d'une languette longitudinale 50. La fenêtre 49 est par exemple ménagée au-dessus des moyens de pivotement prévus entre l'adaptateur 26 et le connecteur 24.

La languette 50 s'étend longitudinalement à partir d'une portion de l'adaptateur opposée à la tête 46. Cette languette 50 s'étend par exemple dans le prolongement de la paroi supérieure 44. Cette languette s'étend notamment dans un sens tête 46 vers moyen de pivotement. Elle est élastiquement déformable et est reliée à son extrémité libre extérieure ou avant au bouton poussoir supérieur 27 précité, qui est en saillie sur la languette 50. A l'état libre sans contrainte, la languette 50 est telle que le bouton poussoir 27 est situé au-dessus d'un plan passant par la paroi supérieure 44. Les déformations élastiques de la languette 50 ont ici lieu dans un plan longitudinal notamment médian, de manière sensiblement vertical, c'est-à-dire sensiblement perpendiculaire à la paroi supérieure 44. L'adaptateur 26 est ainsi équipé d'un bouton poussoir supérieur 27.

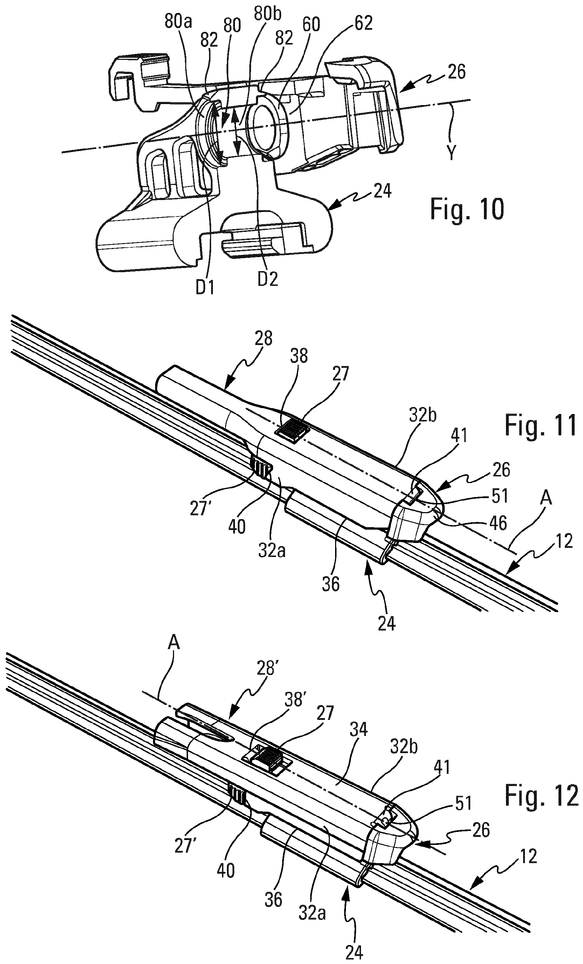

Lors du montage de l'adaptateur 26 dans la pièce terminale 28, le bouton poussoir 27 est destiné à s'engager par encliquetage élastique dans une ouverture 38 (figures 11 & 12) pour verrouiller l'adaptateur vis-à-vis de la pièce terminale 28.

L'adaptateur 26 comprend en outre un orifice supérieur 51 d'engagement d'une patte dans un type particulier de pièce terminale d'un bras d'essuie-glace. Cet orifice supérieur 51 est ici formé en partie dans la tête 46, à l'extrémité arrière de celle-ci, et en partie dans la paroi supérieure 44, à l'extrémité avant de celle-ci. L'orifice 51 a une forme générale par exemple carrée ou rectangulaire.

Les parois latérales 42a, 42b du corps se prolongent vers l'intérieur, ou l'arrière de l'adaptateur 26, par des pattes 52a, 52b élastiquement déformables, et qui s'étendent longitudinalement. Chaque paroi latérale 42a, 42b est reliée à une patte 52a, 52b, ces pattes 52a, 52b étant parallèles ou inclinée l'une par rapport à l'autre, et symétriques par rapport à un plan longitudinal médian, sensiblement vertical, c'est-à-dire perpendiculaire à la paroi supérieure 44 de l'adaptateur. Les extrémités libres des pattes 52a, 52b, qui sont situées du côté opposé à la tête 46, portent chacune un bouton poussoir latéral 27' en saillie. Chaque patte 52a, 52b porte ainsi un bouton poussoir 27". Les déformations élastiques des pattes 52a, 52b ont ici lieu dans un plan longitudinal sensiblement horizontal, c'est-à-dire sensiblement parallèle à la paroi supérieure 44. Les pattes 52a, 52b peuvent être rapprochées l'une de l'autre par déformation élastique. Les boutons poussoirs 27" sont conformés pour coopérer avec des encoches de la pièce terminale 28, comme cela sera décrit plus en détail dans ce qui suit.

Les parois latérales 42a, 42b comprennent chacune un orifice 56 traversant. Les orifices 56 des parois 42a, 42b sont sensiblement coaxiaux et définissent ici l'axe Y de pivotement de l'adaptateur 26 sur le connecteur 24, et donc du balai d'essuyage vis-à-vis du bras d'essuie-glace. Les orifices 56 sont ici à section circulaire et comprennent chacun une surface interne 56a sensiblement cylindrique. Les orifices 56 débouchent à leurs extrémités latérales externes sur les faces externes des parois 42a, 42b, respectivement, et à leurs extrémités latérales internes dans l'espace longitudinal 45.

Les faces latérales internes 61 et 62 délimitant les parois latérales 42a, 42b du côté de l'espace longitudinal 45 et donnent naissance chacune à une protubérance 60. L'adaptateur comprend donc deux protubérances. Ces protubérances sont donc issues de chaque face latérales internes 61 et 62. Chaque paroi latérale 42a, 42b comprend ainsi une protubérance 60, les protubérances étant ici en regard l'une de l'autre et s'étendant sensiblement l'une vers l'autre. Les protubérances 60 sont symétriques par rapport à un plan longitudinal médian de l'adaptateur, perpendiculaire à la paroi supérieure 44. Chaque protubérance 60 présente également un plan de symétrie passant par l'axe Y et perpendiculaire à l'axe A.

Chaque protubérance 60 est trouée et comprend notamment un trou traversant. Ce trou est ici formé par un des orifices 56 précités. Chaque protubérance 60 est ainsi située sur la face interne de la paroi latérale 42a ou 42b de sorte à être traversée par l'orifice 56 de cette paroi.

Chaque protubérance 60 a une forme générale cylindrique et ici tubulaire du fait de l'orifice 56 qui la traverse. L'axe de chaque orifice 56, qui est confondu avec l'axe Y, est également confondu avec l'axe de la protubérance cylindrique 60 correspondante, si bien que l'orifice est centré vis-à-vis de la protubérance. Chaque protubérance 60 forme ainsi un bourrelet annulaire de matière autour de l'orifice 56, ayant sensiblement une épaisseur radiale par rapport à l'axe Y sensiblement constante. Chaque protubérance 60 a une dimension axiale le long de l'axe Y qui représente environ 10 à 20% de la dimension axiale ou largeur le long de l'axe Y, de l'espace longitudinal 45 délimité par les parois latérales 42a et 42b, et par la paroi supérieure 44. Chaque protubérance 60 a un diamètre externe qui représente environ 60 à 80% de la hauteur de la paroi latérale 42a, 42b correspondante, mesurée dans une direction sensiblement verticale perpendiculaire à la paroi supérieure 44.

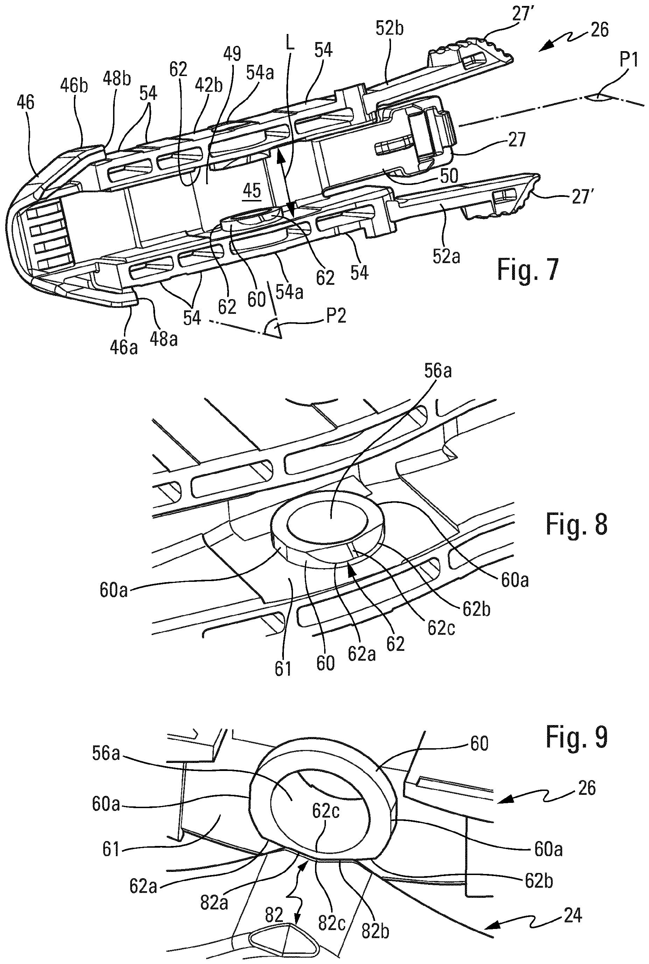

Comme cela est visible aux figures 7 à 9, chaque protubérance 60 comprend que au moins un moyen de centrage et de guidage 62 qui comprend au moins deux portions 62a, 62b distinctes et jointives. Ces portions forment une partie, ici inférieure, tronquée ou chanfreinée de l'adaptateur 26. Chaque moyen de centrage et de guidage 62 définit une rampe qui s'étend dans un plan incliné par rapport aux parois latérales 42a, 42b. Chaque moyen de centrage et de guidage 62 définit au moins une surface de glissement, et ici deux, destinées à coopérer avec le connecteur 24. Les moyens de centrage et de guidage 62 des protubérances 60 sont inclinées de sorte qu'elles s'éloignent l'une de l'autre du haut vers le bas pour former les portions distinctes et jointives. Leurs extrémité inférieures, situées du côté opposé à la paroi supérieure 44, sont espacées l'une de l'autre d'une distance L le long de l'axe Y (figure 7). L'extrémité inférieure de chaque moyen de centrage et de guidage 62 s'étend à faible distance, le long de l'axe Y, de la face interne de la paroi latérale 42a, 42b correspondante, ou peut être directement reliée à cette face latérale interne délimitant la paroi latérale concernée, la distance le long de l'axe Y étant alors égale à 0. Dans ce dernier cas, la distance L est sensiblement égale à la distance entre les faces latérales internes 61 et 62 délimitant les parois latérales 42a, 42b ou à la largeur de l'espace longitudinal 45. Chaque moyen de centrage et de guidage 62, notamment les portions jointives 62a et 62b, s'étend sur un secteur angulaire autour de l'axe Y, représentant un angle compris entre 30 et 150°, et de préférence en tre 90 et 120°.

Dans l'exemple représenté, chaque rampe 62 a en section une forme sensiblement en V inversé. Comme évoqué dans ce qui précède, elle comprend deux portions jointives et distinctes 62a, 62b formant chacune une surface de glissement adjacente et inclinée l'une par rapport à l'autre. Les deux portions 62a, 62b sont ici inclinées l'une par rapport à l'autre d'un angle compris entre 190 et 330°, et de préférence entre 200 et 240°.

Les portions jointives et distinctes 62a, 62b ont chacune une forme générale en aile ou en D. Ces portions sont raccordées ensemble par un cordon 62c sensiblement rectiligne. Ce cordon 62c a ici en section une forme incurvée convexe.

Comme on peut l'apprécier notamment à la figure 8, le moyen de centrage et de guidage 62 est formé par un chanfrein situé sur une arête annulaire externe de la protubérance 60.

Les portions 62a, 62b sont symétriques par rapport à un premier plan longitudinal médian perpendiculaire à la paroi supérieure 44, ainsi que par rapport à un second plan perpendiculaire au premier plan et à la paroi 44 et passant par l'axe Y (figure7).

Dans un exemple de réalisation, chaque portion 62a, 62b est formée par un méplat, c'est-à-dire un secteur plan. Chaque méplat forme ainsi surface de glissement à l'égard de l'autre moyen de centrage et de guidage formé sur l'autre organe, en particulier le connecteur 24.

Bien entendu, les deux méplats du connecteur 24 et/ou de l'adaptateur 26 sont adjacents et inclinés l'un par rapport à l'autre.

Chaque protubérance 60 comprend en outre deux plats externes 60a diamétralement opposés et visibles sur les figures 8 et 9.

Les parois latérales 42a, 42b du corps de l'adaptateur 26 comprennent en outre sur leurs faces latérales externes des moyens 54, 54a en saillie qui définissent des faces d'appui en direction transversale. Au moins certains de ces moyens 54a en saillie sont situés au niveau des orifices 56, et sont traversés par ces orifices dans l'exemple représenté.

Les moyens en saillie comprennent ici des bandes de matière 54, 54a en saillie sur les faces latérales externes des parois latérales 42a, 42b. Les bandes de matière ont une forme allongée et s'étendent longitudinalement entre les bords longitudinaux inférieurs et supérieurs des parois 42a, 42b.

Les bandes de matière 54, 54a définissent des faces d'appui sensiblement parallèles. Ces faces d'appui sont ici sensiblement parallèles aux faces latérales externes des parois 42a, 42b ainsi qu'à l'axe longitudinal de l'adaptateur 26.

Les bandes de matière 54, 54a sont espacées en direction longitudinale les unes des autres et réparties sur les parois latérales 42a, 42b dans la même direction. Dans l'exemple représenté, chaque paroi latérale comprend quatre desdites bandes de matière 54, 54a. Les bandes de matière de l'une des parois latérales sont symétriques par rapport aux bandes de matière de l'autre des parois latérales, par rapport à un plan longitudinal médian de l'adaptateur sensiblement perpendiculaire à sa paroi supérieure 44.

Les bandes de matière 54, 54a ont sensiblement toutes la même épaisseur ou dimension en direction transversale. Les bandes de matière 54a traversées par les orifices 56 ont une largeur ou dimension en direction longitudinale inférieure à celle des autres bandes de matière 54, et également inférieure au diamètre desdits orifices 56.

Le plan transversal médian perpendiculaire à la paroi supérieure 44 de l'adaptateur 26 et passant par l'axe Y traverse les bandes de matière 54a sensiblement en leur milieu et est un plan de symétrie de ces bandes. Autrement dit, les bandes de matière 54a sont sensiblement centrées sur l'axe Y et les orifices 56.

L'adaptateur 26 décrit ci-dessus est avantageusement unitaire, c'est-à-dire constitué par une même matière synthétique. Il peut ainsi être fabriqué au cours d'une unique opération de moulage, notamment par injection.

L'adaptateur 26 est fixé au connecteur 24 grâce aux protubérances 60 qui forment des moyens de fixation de l'adaptateur au connecteur et qui peuvent en outre former des moyens de pivotement de l'adaptateur vis-à-vis du connecteur. Les moyens de fixation sont du type à encliquetage élastique, les protubérances 60 de l'adaptateur 26 étant destinées à coopérer par encliquetage élastique avec des moyens complémentaires, par exemple un ou des paliers, du connecteur 24.

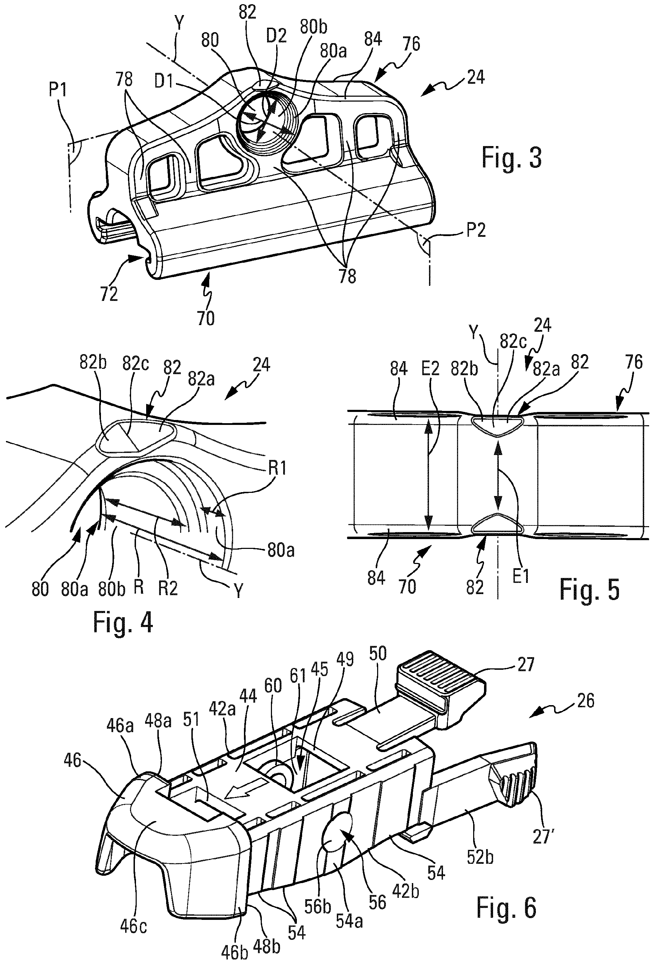

Le connecteur 24, mieux visible aux figures 3 à 5, est agencé pour être rendu solidaire, par exemple par sertissage, du balai d'essuyage 12. Le connecteur 24 assure une liaison mécanique dite complète avec le balai d'essuyage 12, en ce sens qu'il n'existe pas de degré de liberté. Le connecteur 24 peut également assurer une fonction de transport et de distribution d'un liquide de lavage du pare-brise du véhicule.

Le connecteur 24 comprend une embase 70 qui s'étend longitudinalement et transversalement. Cette embase 70 comprend une zone de solidarisation 72 sur le balai d'essuyage 12, et plus particulièrement sur au moins une vertèbre 74 de ce balai d'essuyage. Cette zone de solidarisation 72 prend par exemple la forme d'une saignée ménagée dans l'embase 70, cette saignée générant par deux crochets aptes à venir en prise sur le balai d'essuyage.

Dans l'exemple représenté, le balai d'essuyage 12 comprend deux vertèbres 74 parallèles et coplanaires qui sont espacées l'une de l'autre pour définir un espace de logement de la lame d'essuyage 18. Chaque vertèbre comprend un bord longitudinal, opposé à celui qui est en contact avec la lame 18, qui est reçu dans la saignée du connecteur 24.

L'embase 70 est surmontée d'un flanc 76, par exemple, issu de matière avec l'embase. Ce flanc 76 présente une dimension transversale inférieure à celle de l'embase et une dimension longitudinale sensiblement égale à celle de l'embase. Le flanc 76 est par exemple centré sur l'embase 70, selon l'axe Y. Le flanc 4 peut présenter une pluralité de nervures 78 qui assurent un renforcement mécanique du flanc.

Le connecteur 24 et l'adaptateur 26 sont reliés mécaniquement par une liaison pivot. En ce qui concerne le connecteur 24, cette liaison pivot est mise en oeuvre par un orifice 80 réalisé dans le flanc 76. Cet orifice 80 s'étend selon l'axe Y. Il traverse le flanc 76. En d'autres termes, l'orifice 80 a un axe central centré sur l'axe Y.

Dans l'exemple représenté, l'orifice 80 comprend des portions adjacentes 80a, 80b coaxiales et de diamètres différents. L'orifice 80 comprend trois portions : une première portion latérale 80a, une seconde portion latérale 80a, et une troisième portion médiane 80b s'étendant entre les portions latérales 80a. Les portions latérales 80a ont un diamètre interne D1 qui est supérieur au diamètre interne D2 de la portion médiane 80b. Les portions latérales 80a sont des secteurs circulaires formant palier à l'égard des protubérances 60 de l'adaptateur 26. Le rapport D2/D1 est par exemple compris entre 0,6 et 0,9. Les diamètres internes D1 et D2 sont également illustrés sur la figure 10.

La première portion latérale 80a comprend une surface cylindrique interne qui comprend une extrémité longitudinale, le long de l'axe Y, qui débouche sur une face latérale du flanc 76 et qui est reliée à cette face par un bord annulaire par exemple chanfreiné ou arrondi convexe, et une extrémité longitudinale opposée qui est reliée par une surface annulaire sensiblement radiale par rapport à l'axe Y à une extrémité de la portion médiane 80b.

De la même façon, la seconde portion latérale 80a comprend une surface cylindrique interne qui comprend une extrémité longitudinale, le long de l'axe Y, qui débouche sur l'autre face latérale du flanc 76 et qui est reliée à cette face par un bord annulaire par exemple chanfreiné ou arrondi convexe, et une extrémité longitudinale opposée qui est reliée par une surface annulaire sensiblement radiale par rapport à l'axe Y à l'autre extrémité longitudinale de la portion médiane 80b. Les première et seconde portions latérales 80a du moyen de pivotement formé sur le connecteur 24 représentent ainsi des portions d'extrémité de l'orifice 80, selon l'axe Y.

Chaque portion latérale 80a a une épaisseur R1 ou dimension mesurée selon l'axe Y représentant 5 à 25% de celle R de l'orifice 80, mesurée selon le même axe. La portion médiane a une épaisseur R2 ou dimension mesurée selon l'axe Y représentant 50 à 90% de celle R de l'orifice.

Le connecteur 24 décrit ci-dessus est avantageusement unitaire, c'est-à-dire constitué par une même matière synthétique. Ce connecteur peut ainsi être fabriqué au cours d'une unique opération de moulage, notamment par injection.

L'adaptateur 26 est monté sur le connecteur 24 par encliquetage élastique de ses protubérances 60 dans l'orifice 80 du connecteur, et plus particulièrement dans les portions latérales 80a constitutives de l'orifice 80. Les moyens de centrage et de guidage 62 des protubérances 60 de l'adaptateur 26 coopèrent avec le connecteur pour faciliter ce montage. De son côté, le connecteur comprend également des moyens de centrage et de guidage 82 facilitant une insertion des protubérances 60 de l'adaptateur 26 dans son orifice 80.

Ces moyens sont ici aménagés sur le flanc 76 du connecteur 24. Il s'agit ici d'encoches 82 ménagées dans les faces latérales délimitant le flanc 76, et au droit de laquelle l'orifice 80 se termine. On comprend ici que chaque encoche 82 et l'orifice 80 sont au voisinage l'un avec l'autre, l'encoche 82 s'étendant ainsi depuis une arête 84 du flanc 76 jusqu'au trou formant l'orifice 80, ou sensiblement jusque celui-ci. Au droit de chaque encoche 82, le flanc 76 présente une épaisseur E1 inférieure à une épaisseur E2 d'une portion du flanc 76 bordant ladite encoche 82. Ces épaisseurs E1, E2 sont mesurées selon une direction parallèle à l'axe Y. Ainsi formée, cette encoche 82 est délimitée par deux surfaces de guidage 82a. Les portions jointives et distinctes 82a formant surfaces de guidage des encoches 82 sont complémentaires, ou sensiblement complémentaire, de celles des portions jointives 62a, 62b des moyens 62 formées sur les protubérances 60 de l'adaptateur 26.

Dans l'exemple représenté, chaque encoche 82 a en section une forme sensiblement en V droit. Les surfaces 82a, 82b sont adjacentes et inclinées l'une par rapport à l'autre, ici d'un angle compris entre 30 et 170°, et de préférence entre 120 et 160°, de manière à former un entonnoir qui guide les protubérances 60 vers l'orifice 80.

Les portions jointives 82a, 82b sont raccordées ensemble par un cordon rectiligne 82c, qui a ici en section une forme incurvée concave, vu de l'extérieur du connecteur 24. Les portions ou surfaces ont chacune une forme générale en aile delta dans l'exemple représenté.

Les encoches 82 sont symétriques par rapport à un premier plan médian P1 perpendiculaire à l'axe Y. Un second plan P2 perpendiculaire audit premier plan passe sensiblement par l'axe Y et au milieu des encoches (figure 3).

L'assemblage de l'adaptateur 26 sur le connecteur 24 est réalisé uniquement par une translation verticale selon un axe perpendiculaire à la paroi supérieure 44 de l'adaptateur, cette translation étant moins dommageable pour l'adaptateur grâce à la présence du ou des moyens de centrage et de guidage 62 et/ou 82. Lors de cette translation, les protubérances 60 de l'adaptateur 26 s'engagent dans les encoches 82 du connecteur et leurs portions 62a, 62b coopèrent par glissement avec les portions 82a, 82b de l'adaptateur 26 pour centrer et guider cet adaptateur sur le connecteur. La distance L précitée est de préférence supérieure à l'épaisseur E1. Par ailleurs, la distance inter protubérances 60, mesurée le long de l'axe Y, est inférieure à la largeur de l'orifice 80 ainsi que l'épaisseur E2.

Lors de l'insertion des protubérances 60 dans les encoches 82, les portions jointives et distinctes 62a et 62b prennent appui sur les surfaces 82a et 82b des encoches et la translation vers le bas de l'adaptateur 26 est poursuivie de sorte que les parois latérales 42a, 42b de l'adaptateur soient contraintes de se déformer en s'écartant l'une de l'autre du fait du glissement des rampes sur les surfaces des encoches. Cette opération est poursuivie jusqu'à ce que les protubérances 60 s'engagent par encliquetage ou retour élastique dans l'orifice 80 du connecteur, et plus exactement dans la première portion latérale 80a et dans la seconde portion latérale 80a de l'orifice 80. L'adaptateur 26 est alors fixé au connecteur 24 et peut en outre pivoter sur lui autour de l'axe Y, par coopération de ses protubérances avec les surfaces cylindriques internes des portions latérales 80a de l'orifice 80 (figure 10). Les protubérances 60 peuvent avoir un diamètre interne inférieur ou égal à celui D2 de la portion médiane 80b de l'orifice 80, et un diamètre externe inférieur ou égal à celui D1 des portions latérales 80a.

Les figures 11 à 17 montrent plusieurs types de bras d'essuie-glace pouvant être équipés de l'adaptateur 26.

On se réfère d'abord aux figures 11 et 12 qui représentent respectivement deux pièces terminales 28, 28' de bras d'entraînement différents.

Chaque pièce terminale 28, 28' comprend deux jambes latérales 32a, 32b dont les bords longitudinaux supérieurs sont reliés entre eux par une paroi transversale supérieure 34. Les jambes 32a, 32b et la paroi 34 délimitent entre elles un espace de logement de l'adaptateur 26. Les jambes 32a, 32b peuvent comprendre au niveau de leurs bords longitudinaux inférieurs des moyens 36, tels que des bords repliés ou crochets tournés vers l'espace délimité par les jambes latérales, de retenue de l'adaptateur 26 dans l'espace précité.

La paroi supérieure 34 comprend une ouverture 38, 38' traversante destinée à recevoir le bouton poussoir supérieur 27. En position de montage, le bouton poussoir 27 est logé dans cette ouverture 38 et peut traverser cette dernière de façon à être en saillie sur la face supérieure de la paroi 34. Le montage du bouton poussoir 27 dans l'ouverture 38 se fait par engagement ou emboîtement, de préférence par encliquetage élastique.

Les parois latérales 32a, 32b peuvent comprendre chacune une encoche 40 de forme complémentaire d'un bouton poussoir latéral 27'. En position de montage, les boutons poussoirs latéraux 27' sont logés dans ces encoches 40 et peuvent les traverser de façon à être en saillie sur les faces externes des parois 32a, 32b. Le montage des boutons poussoirs 27' dans les encoches 40 se fait par engagement ou emboîtement, de préférence par encliquetage élastique.

Les pièces terminales 28, 28' sont différentes. Elles ont globalement une section en forme de U mais diffèrent les unes des autres notamment par des dimensions et par la forme et la taille de leurs ouvertures 38, 38' ou encoches 40.

Les parois supérieures 34 des pièces terminales 28, 28' se prolongent vers l'extérieur pour former chacune une patte 41 à section longitudinale sensiblement en S, qui est configurée pour être engagée dans l'orifice 51 de l'adaptateur 26.

Les pièces terminales 28, 28' ont sensiblement la même largeur externe. Par ailleurs, les nervures 54 des faces externes des parois latérales du corps de l'adaptateur 26 peuvent être espacées d'une paroi à l'autre d'une distance transversale sensiblement égale à la largeur interne de la pièce transversale 28, 28', de façon à ce que la pièce terminale soit calée en direction transversale par coopération de ses jambes avec les parois latérales du corps de l'adaptateur.

On va maintenant décrire le montage de l'adaptateur 26 sur chacune des pièces terminales 28, 28'.

L'adaptateur 26 est engagé dans la pièce terminale 28, 28' en inclinant tout d'abord, dans un plan perpendiculaire à la paroi supérieure 44 de l'adaptateur 26, l'axe longitudinal de l'adaptateur vis-à-vis de l'axe d'allongement A de la pièce terminale 28 puis en engageant la patte 41 de la pièce terminale dans l'orifice 51 de l'adaptateur. Lors de cet engagement, les jambes de la pièce terminale commencent par glisser sur les nervures 54 de l'adaptateur. De plus, le bord d'extrémité avant de la paroi supérieure de la pièce terminale vient en appui sur la face arrière supérieure 48b de la tête 46 de l'adaptateur. L'extrémité arrière de l'adaptateur est ensuite rapprochée de la pièce terminale jusqu'à ce que les boutons poussoirs latéraux 27' s'engagent par encliquetage élastique dans les encoches 40 de la pièce terminale 28, 28'. Un tel rapprochement peut être opéré par une rotation de l'adaptateur 26 vers la pièce terminale 28 ou 28' autour d'un axe passant le long de la face arrière supérieure 48b, parallèlement à l'axe Y. Les bords d'extrémité avant des jambes latérales 32a, 32b de la pièce terminale viennent en appui sur les faces arrière latérales 48a de la tête 46 de l'adaptateur. Les axes de l'adaptateur et de la pièce terminale 28 sont alors sensiblement parallèles.

On se réfère maintenant aux figures 13 et 14, dans lesquelles l'adaptateur 26 est relié à un bras d'essuie-glace 14 du type bras tige, c'est-à-dire dépourvu de pièce terminale supplémentaire, par l'intermédiaire d'un premier organe de liaison 88.

Cet organe de liaison 88 est monté sur l'adaptateur 26 et le recouvre intégralement dans l'exemple représenté. Il a une forme allongée et comprend un logement interne dans lequel est monté et retenu l'adaptateur 26. Il comprend à son extrémité arrière des encoches latérales 90 destinées à recevoir par encliquetage élastiques les boutons poussoirs 27', respectivement.

Le bras tige 14' comprend une extrémité engagée dans l'organe de liaison 88, sur sensiblement toute sa longueur, depuis l'extrémité longitudinale arrière de l'organe 88. Le bras tige 14' est solidarisé à l'organe de liaison 88 par des moyens appropriés et peut être démonté de l'organe par l'actionnement de boutons poussoirs 92 portés par l'organe et destinés à coopérer avec l'extrémité du bras tige 14'.

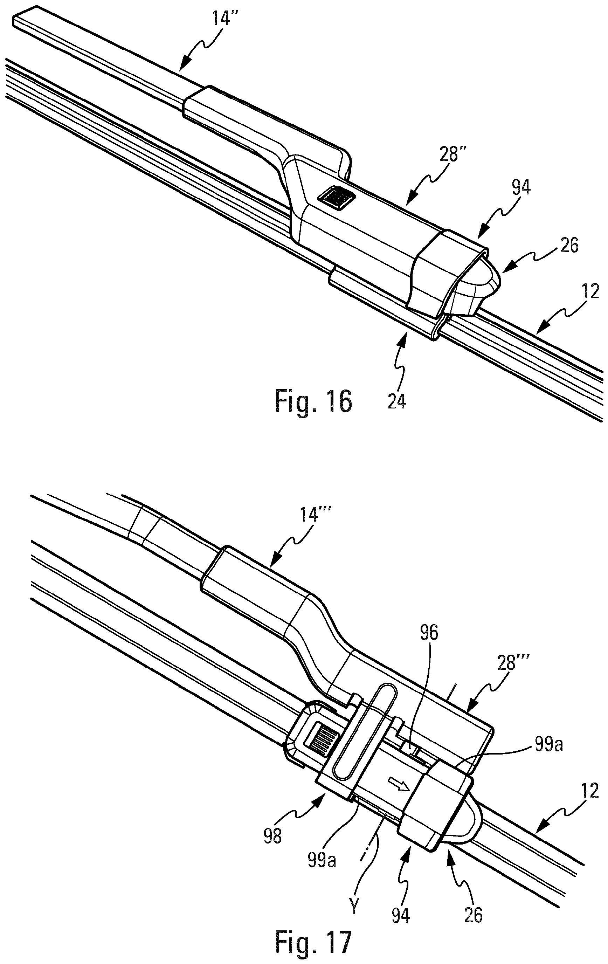

La figure 15 montre un second organe de liaison 94 qui peut être utilisé pour relier l'adaptateur 26 à deux autres types de bras d'essuie-glace, représentés respectivement aux figures 16 et 17.

L'organe de liaison 94 présente une fonction similaire à celle de l'adaptateur, c'est-à-dire interfacer le balai d'essuyage d'essuyage à un autre type de pièce terminale. Cet organe de liaison 94 est destiné à être monté sur l'adaptateur pour le recouvrir au moins en partie. Il est notamment utilisé pour pouvoir équiper un bras d'essuie-glace 14" doté d'une pièce terminale 28" large avec l'adaptateur 26. La pièce terminale 28" du bras d'essuie-glace 14" de la figure 16 diffère de celles des figures 11 et 12 notamment en ce qu'elle a une largeur plus importante. L'organe de liaison 94 est configuré pour rattraper les jeux entre l'adaptateur 26 et la pièce terminale 28", et pour épouser les formes de ces derniers en étant pris en sandwich entre eux. La pièce terminale 28" est similaire à celles des figures 11 et 12, à l'exception de sa forme en S selon l'axe longitudinal de la pièce terminale.

Le bras d'essuie-glace 14''' de la figure 17 est un bras d'essuie-glace à verrouillage latéral (de l'anglais side-lock) dont la pièce terminale 28'" comprend d'une part une tige cylindrique 96 s'étendant transversalement sur un côté de la pièce terminale, ainsi qu'un verrou 98 en forme de L qui s'étend transversalement du même côté que la tige 96, parallèlement et à distance de cette dernière.

La tige 96 est destinée à traverser des orifices latéraux de l'organe 94, qui sont alignés sur l'axe Y et donc alignés avec les orifices 56 de l'adaptateur 26 et l'orifice 80 du connecteur. La tige 96 est engagée dans ces orifices jusqu'à ce que sa pièce transversale 28'" prennent appui sur une face latérale externe 99a de l'organe 94. La pièce transversale 28'" peut coopérer par glissement avec la face latérale externe 99a lors du pivotement du balai d'essuyage vis-à-vis du bras d'essuie-glace 14"'.

Le verrou 98 en L comprend un crochet à son extrémité libre qui est destiné à coopérer par glissement avec une face latérale 99b opposée de l'organe 94 lors du pivotement du balai d'essuyage vis-à-vis du bras d'essuie-glace 14"', et empêche une désolidarisation accidentelle du balai d'essuyage vis-à-vis du bras d'essuie-glace en fonctionnement. Lors du pivotement, la tige 96 peut être guidée par les surfaces cylindriques internes des protubérances 60 voire également la surface cylindrique interne de la partie médiane 80b de l'orifice.

L'adaptateur 26 « universel » peut ainsi être associé à plusieurs types de bras d'entraînement.

## Revendications

1. Organe (24, 26) pour un système de connexion d'un balai d'essuyage (12) à un bras (14) d'essuie-glace, cet organe comprenant des moyens d'articulation (80) configurés pour coopérer avec des premiers moyens (60) complémentaires d'un second organe (26, 24) du système de connexion de manière à tourner autour d'au moins un axe d'articulation (Y) de l'organe vis-à-vis de ce second organe, ledit organe comportant des moyens de centrage et de guidage (62, 82) configurés pour coopérer avec des seconds moyens (82, 62) complémentaires du second organe pour faciliter le montage de l'organe dans ou sur le second organe, organe (24, 26) dans lequel lesdits moyens de centrage et de guidage (62, 82) comprennent au moins deux portions (62a, 62b, 82a, 82b) distinctes et jointives, ledit organe (24, 26) étant **caractérisé en ce que** les portions (62a, 62b, 82a, 82b) forment une encoche (82) ou un chanfrein (62) à section sensiblement en forme de V, droit ou inversé et **en ce que** lesdites portions (82, 62) sont situées au voisinage d'un orifice (80) ou d'une protubérance (60) constitutif des moyens d'articulation.

2. Organe (24, 26) selon la revendication 1, dans lequel les portions (62a, 62b, 82a, 82b) sont chacune formée par un méplat formant surface de glissement.

3. Organe (24, 26) selon la revendication 2, dans lequel deux méplats sont adjacents et inclinés l'un par rapport à l'autre.

4. Organe (24, 26) selon l'une quelconque des revendications précédentes, dans lequel les portions (62a, 62b, 82a, 82b) s'étendent dans des plans distincts.

5. Organe (24) selon l'une quelconque des revendications précédentes, dans lequel les portions (62a, 62b, 82a, 82b) forment au moins une encoche (82) qui présente en section une forme sensiblement en V droit, ses deux portions (82a, 82b) adjacentes étant inclinées l'une par rapport à l'autre d'un angle compris entre 30 et 170°, et de préférence entre 120 et 160°.

6. Organe (26) selon l'une quelconque des revendications précédentes, dans lequel les portions forment au moins un chanfrein (62) qui présente en section une forme sensiblement en V inversé, ses deux portions (62a, 62b) adjacentes étant inclinées l'une par rapport à l'autre d'un angle compris entre 190 et 330°, et de préférence entre 200 et 240°.

7. Organe (24, 26) selon l'une des revendications précédentes, dans lequel lesdites portions (82, 62) sont situées sur une arête dudit organe.

8. Organe (24, 26) selon l'une des revendications précédentes, dans lequel lesdits moyens de centrage et de guidage comprennent deux paires de portions (82, 62) qui sont symétriques par rapport à un premier plan médian longitudinal (P1) de l'organe.

9. Organe (24, 26) selon la revendication 8, dans lequel lesdits moyens de centrage et de guidage comprennent deux paires de portions (82, 62) qui sont symétriques par rapport à un second plan médian transversal (P2) de l'organe.

10. Organe (24, 26) selon la revendication 9, dans lequel le premier plan (P1) est perpendiculaire audit axe d'articulation (Y) et le second plan (P2) passe par l'axe d'articulation.

11. Organe (24, 26) selon l'une quelconque des revendications 1 à 8, dans lequel les moyens de centrage et de guidage comprennent uniquement deux portions (62a, 62b, 82a, 82b) distinctes et jointives.

12. Organe (24, 26) selon l'une des revendications précédentes, dans lequel l'organe est un connecteur (24) configuré pour être solidarisé audit balai d'essuyage (12) ou un adaptateur (26) configuré pour être solidarisé au bras d'essuie-glace (14).

13. Système de connexion d'un balai d'essuyage (12) à un bras d'essuie-glace (14), ce système comportant deux organes (24, 26) dont l'un est configuré pour être solidarisé audit balai d'essuyage (12) et l'autre est configuré pour être solidarisé au bras d'essuie-glace (14), **caractérisé en ce qu'**au moins un des organes, et de préférence les deux où l'un est un connecteur (24) et l'autre est un adaptateur (26), est tel que défini selon l'une des revendications précédentes.

14. Balai d'essuyage (12), **caractérisé en ce qu'**il comprend au moins un organe (24, 26), et de préférence deux organes dont l'un est un connecteur (24) et l'autre est un adaptateur (26), selon l'une des revendications 1 à 12, ou un système selon la revendication 13.

## Patentansprüche

1. Element (24, 26) für ein System zum Verbinden eines Wischblatts (12) und eines Arms (14) eines Scheibenwischers, wobei das Element zum Zusammenwirken mit den ersten Mitteln (60) ergänzend zu einem zweiten Element (26, 24) des Systems zum Verbinden ausgebildete Gelenkmittel (80) umfasst, so dass es sich wenigstens um eine Gelenkachse (Y) des Elements gegenüber dem zweiten Element dreht, wobei das Element zum Zusammenwirken mit den zweiten Mitteln (82, 62) ergänzend zum zweiten Element zum Erleichtern der Montage des Elements in oder auf dem zweiten Element ausgebildete Zentrierungs- und Führungselemente (62, 82) umfasst, wobei die Zentrierungs- und Führungsmittel (62, 82) im Element (24, 26) wenigstens zwei verschiedene und aneinander stoßende Abschnitte (62a, 62b, 82a, 82b) umfassen, wobei das Element (24, 26) **dadurch gekennzeichnet ist, dass** die Abschnitte (62a, 62b, 82a, 82b) einen Einschnitt (82) oder eine Schräge (62) mit einem Querschnitt mit im Wesentlichen einer geraden oder umgekehrten Keilform bilden und die Abschnitte (82, 62) in der Nähe einer Bestandteil der Gelenkmittel bildenden Öffnung (80) oder Erhebung (60) angeordnet sind.

2. Element (24, 26) nach Anspruch 1, wobei die Abschnitte (62a, 62b, 82a, 82b) jeweils von einer eine Gleitfläche bildenden Abflachung gebildet sind.

3. Element (24, 26) nach Anspruch 2, wobei zwei Abflachungen angrenzend und zueinander geneigt sind.

4. Element (24, 26) nach einem der vorhergehenden Ansprüche, wobei sich die Abschnitte (62a, 62b, 82a, 82b) auf verschiedenen Ebenen erstrecken.

5. Element (24) nach einem der vorhergehenden Ansprüche, wobei die Abschnitte (62a, 62b, 82a, 82b) wenigstens einen Einschnitt (82) bilden, der im Querschnitt eine im Wesentlichen gerade Keilform aufweist, wobei die zwei angrenzenden Abschnitte (82a, 82b) in einem Winkel von 30 bis 170° und vorzugweise 120 bis 160° zueinander geneigt sind.

6. Element (26) nach einem der vorhergehenden Ansprüche, wobei die Abschnitte wenigstens eine Schräge (62) bilden, die im Querschnitt eine im Wesentlichen umgekehrte Keilform aufweist, wobei die zwei angrenzenden Abschnitte (62a, 62b) in einem Winkel von 190 bis 330° und vorzugweise 200 bis 240° zueinander geneigt sind.

7. Element (24, 26) nach einem der vorhergehenden Ansprüche, wobei die Abschnitte (82, 62) auf einer Kante des Elements angeordnet sind.

8. Element (24, 26) nach einem der vorhergehenden Ansprüche, wobei die Zentrierungs- und Führungsmittel zwei Abschnittpaare (82, 62) umfassen, die in Bezug auf eine erste Längsmedianebene (P1) des Elements symmetrisch sind.

9. Element (24, 26) nach Anspruch 8, wobei die Zentrierungs- und Führungsmittel zwei Abschnittpaare (82, 62) umfassen, die in Bezug auf eine zweite Quermedianebene (P2) des Elements symmetrisch sind.

10. Element (24, 26) nach Anspruch 9, wobei die erste Ebene (P1) senkrecht zur Gelenkachse (Y) ist und die zweite Ebene (P2) durch die Gelenkachse verläuft.

11. Element (24, 26) nach einem der Ansprüche 1 bis 8, wobei die Zentrierungs- und Führungsmittel ausschließlich zwei verschiedene und aneinander stoßende Abschnitte (62a, 62b, 82a, 82b) umfassen.

12. Element (24, 26) nach einem der vorhergehenden Ansprüche, wobei das Element ein zum Verbinden mit dem Wischblatt (12) ausgebildetes Verbindungsstück (24) oder ein zum Verbinden mit dem Wischarm (14) ausgebildeter Adapter (26) ist.

13. System zum Verbinden eines Wischblatts (12) mit einem Wischarm (14), wobei das System zwei Elemente (24, 26) umfasst, von denen eines zum Verbinden mit dem Wischblatt (12) ausgebildet ist und das andere zum Verbinden mit dem Wischarm (14) ausgebildet ist, **dadurch gekennzeichnet, dass** wenigstens eines der Elemente, und vorzugsweise beide, von denen eines ein Verbindungsstück (24) und das andere ein Adapter (26) ist, nach einem der vorhergehenden Ansprüche definiert sind.

14. Wischblatt (12), **dadurch gekennzeichnet, dass** es wenigstens ein Element (24, 26) und vorzugweise zwei Elemente, von denen eines ein Verbindungsstück (24) und das andere ein Adapter (26) ist, nach einem der Ansprüche 1 bis 12 oder ein System nach Anspruch 13 umfasst.

## Claims

1. Member (24, 26) for a system for connecting a wiper blade (12) to a windscreen wiper arm (14), this member comprising articulation means (80) configured in order to interact with first means (60) complementing a second member (26, 24) of the connection system in such a manner as to turn about at least one axis (Y) of articulation of the member vis-à-vis this second member, said member comprising centring and guide means (62, 82) configured in order to interact with second means (82, 62) complementing the second member in order to facilitate the mounting of the member in or on the second member, member (24, 26) in which said centring and guide means (62, 82) comprise at least two distinct and contiguous portions (62a, 62b, 82a, 82b), said member (24, 26) being **characterized in that** the portions (62a, 62b, 82a, 82b) form a notch (82) or a chamfer (62) having a section substantially in the form of an upright or inverted V and **in that** said portions (82, 62) are located in the vicinity of a hole (80) or of a protuberance (60) constituting articulation means.

2. Member (24, 26) according to Claim 1, wherein the portions (62a, 62b, 82a, 82b) are each formed by a flat forming a sliding surface.

3. Member (24, 26) according to Claim 2, wherein two flats are adjacent and inclined relative to one another.

4. Member (24, 26) according to any one of the preceding claims, wherein the portions (62a, 62b, 82a, 82b) extend in distinct planes.

5. Member (24) according to any one of the preceding claims, wherein the portions (62a, 62b, 82a, 82b) form at least one notch (82) that in section is substantially in the form of an upright V, its two adjacent portions (82a, 82b) being inclined relative to one another by an angle of between 30 and 170°, and preferably between 120 and 160°.

6. Member (26) according to any one of the preceding claims, wherein the portions form at least one chamfer (62) that in section is substantially in the form of an inverted V, its two adjacent portions (62a, 62b) being inclined relative to one another by an angle of between 190 and 330°, and preferably between 200 and 240°.

7. Member (24, 26) according to one of the preceding claims, wherein said portions (82, 62) are located on a ridge of said member.

8. Member (24, 26) according to one of the preceding claims, wherein said centring and guide means comprise two pairs of portions (82, 62) that are symmetrical relative to a first, longitudinal median plane (P1) of the member.

9. Member (24, 26) according to Claim 8, wherein said centring and guide means comprise two pairs of portions (82, 62) that are symmetrical relative to a second, transverse median plane (P2) of the member.

10. Member (24, 26) according to Claim 9, wherein the first plane (P1) is perpendicular to said axis (Y) of articulation and the second plane (P2) passes via the axis of articulation.

11. Member (24, 26) according to any one of Claims 1 to 8, wherein the centring and guide means comprise solely two distinct and contiguous portions (62a, 62b, 82a, 82b).

12. Member (24, 26) according to one of the preceding claims, wherein the member is a connector (24) configured in order to be secured to said wiper blade (12) or an adapter (26) configured in order to be secured to the windscreen wiper arm (14).

13. System for connecting a wiper blade (12) to a windscreen wiper arm (14), this system comprising two members (24, 26), one of which is configured in order to be secured to said wiper blade (12) and the other is configured in order to be secured to said windscreen wiper arm (14), **characterised in that** at least one of the members, and preferably both where one is a connector (24) and the other is an adapter (26), is such as defined according to one of the preceding claims.

14. Wiper blade (12), **characterised in that** it comprises at least one member (24, 26), and preferably two members, one of which is a connector (24) and the other is an adapter (26), according to one of Claims 1 to 12, or a system according to Claim 13.
